# EUROPÄISCHE PATENTSCHRIFT

(11) **EP 4 505 091 B1**
(45) Veröffentlichungstag und Bekanntmachung des Hinweises auf die Patenterteilung: **15.10.2025**
(21) Anmeldenummer: 24720780.6
(22) Anmeldetag: 17.04.2024
(51) Int. Cl.: F16D 65/092

(54) **BREMSPAD UND SCHEIBENBREMSE**
BRAKE PAD AND DISC BRAKE
PLAQUETTE DE FREIN ET FREIN À DISQUE

(30) Priorität: 21.04.2023 DE 102023110198
(43) Veröffentlichungstag der Anmeldung: 12.02.2025
(73) Patentinhaber: BPW Bergische Achsen Kommanditgesellschaft, 51674 Wiehl (DE)
(72) Erfinder: SCHUMACHER, Torsten, 51588 Nümbrecht (DE)
(74) Vertreter: DREISS Patentanwälte PartG mbB
(86) Internationale Anmeldenummer: PCT/EP2024/060391
(87) Internationale Veröffentlichungsnummer: WO 2024/218136

(56) Entgegenhaltungen:
- AU-A1- 2014 330 008

## Beschreibung

Die Erfindung betrifft ein Bremspad. Das Bremspad ist für eine Fahrzeugbremse, insbesondere für eine Scheibenbremse, vorgesehen und weist eine Rückenplatte und mit einem auf der Plattenvorderseite der Rückenplatte angeordneten Reibbelag auf, wobei die Rückenplatte eine in einer ersten Radialebene liegende erste radiale Abstützfläche zur Abstützung gegen eine erste radiale Gegenfläche an einem Bremsträger oder Bremssattel aufweist. Weiter weist die die Rückenplatte eine in einer zweiten Radialebene liegende zweite radiale Abstützfläche zur Abstützung gegen eine zweite radiale Gegenfläche an einem Bremsträger oder Bremssattel auf. Dabei sind die ersten Radialebene und die zweite Radialebene wenigstens weitgehend parallel zueinander verlaufend angeordnet, wobei die Rückenplatte zwei in einer gemeinsamen Tangentialebene liegende tangentiale Abstützflächen zur Abstützung gegen eine an einem Bremsträger oder Bremssattel vorgesehene tangentiale Gegenfläche aufweist. Weiter betrifft die Erfindung auch eine Scheibenbremse.

In der DE 20 2005 005 798 U1 ist eine Schwimmsattel-Scheibenbremse insbesondere für Nutzfahrzeuge mit einem Bremsträger, einer Bremsscheibe, einem die Bremsscheibe übergreifenden Bremssattel und Bremspads, gezeigt. Die Bremspads werden aus radialer Richtung von außen in einen Belagschacht eingesetzt, wobei die Flächen des Belagschachts rechtwinklig zueinander angeordnet sind.

Die EP 3 027 926 B1 und die DE 10 2013 012 547 B4 zeigt einen U-förmigen Schacht für ein Bremspad in einer Scheibenbremse. Es sind abstützende Abschnitte entsprechend einer Mittelebene geneigt, um mit einer Rückenplatte des Bremspads zu korrespondieren, um eine Verwechslung eines äußeren und eines inneren Bremspads entgegenzuwirken. Dies kann jedoch nur auf einer Seite der Scheibenbremse verwirklicht werden, da die gezeigte Ausführungsform den Einbau der Bremspads nur in axialer Richtung ermöglicht. Ein falscher Einbau des Bremspads mit der Rückenplatte zur Bremsscheibe kann nicht verhindert werden.

Im Stand der Technik gibt es den Nachteil, dass der Einbau mit der Rückenplatte des Pads hin zur Bremsscheibe möglich ist, selbst wenn das richtige Pad ausgewählt wird.

Die JP 2008-196 683 A zeigt eine Scheibenbremse für Fahrzeuge, wobei die Bremspads in Rotationsrichtung der Bremsscheibe zueinander versetzt sind und zusätzliche Keilelemente an ihren Radialflächen angeordnet werden.

In der DE 1525385 A ist eine Teilbelagscheibenbremse, insbesondere für Kraftfahrzeuge, mit Bremsbacken, die aus Bremsbelägen mit Rückenplatten bestehen, offenbart. Die Bremsbacken werde so abgestützt, dass Betätigungseinrichtungen durch die Bremskräfte unbelastet bleiben um dadurch ein Verklemmen und Verbiegen der Betätigungseinrichtung zu vermeiden.

Eine Reibbacke, bei der, bezogen auf die Hauptdrehrichtung, zumindest die einlaufseitige Kante des Reibmaterialblocks wenigstens mit dem größeren Teil ihrer Länge in Hauptdrehrichtung geneigt ausgerichtet ist, ist in der DE 3109939 A1 gezeigt.

Aus der US 2022/0163079 A1 ist ein Bremspad für eine Scheibenbremse mit einer um eine Achse rotierenden Bremsscheibe bekannt geworden, bei der Abstützflächen des Bremspads und des Belagträgers auf einer Unterseite zu der Bremsscheibe hin oder weg geneigt sind.

In der EP 0 752 541 A1 wird eine asymmetrische Gestaltung beider Pads einschließlich ihrer Rückenplatten und der Führungsflächen vorgeschlagen, die einen verdrehten Einbau der Pads verhindern sollen. Jedoch sind diese Ausgestaltungen ungünstig in der Herstellung und vermindern unter anderem die Fläche des Reibbelags.

Die DE 20 2004 021 249 U1 zeigt eine Scheibenbremse mit Bremspads, die Ausnehmungen für korrespondierende Vorsprünge in einem Bremssattel oder in einem Bremsträger aufweisen. Dadurch soll ein verdrehter Einbau des Bremspads mit der Rückenplatte zur Bremsscheibe unterbunden werden. Die Bremspads müssen jedoch nachträglich mit den Ausnehmungen versehen werden und am Bremssattel oder/oder am Bremsträger müssen im jeweiligen Belagschacht zusätzliche Vorsprünge angeformt werden.

Die AU 2014 330 008 Al offenbart ein Bremspad für eine Fahrzeugbremse mit Merkmalen des Oberbegriffs des Anspruchs 1, wobei das Dokument einen stumpfen Winkel bei den Halterungen zeigt (retaining features).

Der Erfindung liegt die Aufgabe zugrunde ein Bremspad bzw. eine Fahrzeugbremse mit einer hohen Prozesssicherheit beim Zusammenbau mit vereinfachtem Aufbau gegenüber dem Stand der Technik bereitzustellen.

Die der Erfindung zugrundeliegende Aufgabe wird gelöst durch ein Bremspad für eine Fahrzeugbremse nach Anspruch 1. Das Bremspad zeichnet sich insbesondere dadurch aus, dass die Tangentialebene mit der ersten Radialebene einen spitzen Winkel und mit der zweiten Radialebene einen stumpfen Winkel einschließt.

Eine Fahrzeugbremse ist eine Scheibenbremse, die eine Belagaufnahme für das Bremspad und eine um eine Bremsenmittelachse angeordnete Bremsscheibe umfasst.

Unter den Abstützflächen des Bremspads nach Anspruch 1 sollen jene Flächen des Bremspads verstanden werden, welche beim Bremsvorgang die Bremskräfte und -momente auf korrespondierende Auflageflächen bzw. Gegenflächen eines Bremsträgers oder eines Bremssattels abführen.

Mittig zwischen der ersten Radialebene und der zweiten Radialebene liegend eine Bremspadmittelebene, die durch die Bremsenmittelachse verläuft, wenn das Bremspad in die Belagaufnahme eigesetzt ist.

Die Erfindung hat den Vorteil, dass beim Einbau des Bremspads in eine Belagaufnahme des Bremssattels oder des Bremsträgers stets der Reibbelag in Richtung der Bremsscheibe zeigt und so ein korrekter Einbau stets gewährleistet ist. Durch die Anordnung der Tangentialebene mit der ersten und zweiten Radialebene kann das Bremspad nur richtig herum eingesetzt werden, denn ein verdreht eingesetztes Bremspad steht aus dem Bremssattel oder Bremsträger heraus, sodass eine Befestigung des Bremspads, insbesondere mit Niederhaltemitteln, nicht möglich ist oder gar das Fahrzeugrad durch das hervorstehende Bremspad blockiert wird. Demgegenüber steht ein korrekt eingesetztes Bremspad nicht oder nur im vorhergesehenen Maße aus dem Bremsträger oder Bremssattel hervor, ist sicher befestigbar und gewährleistet somit eine korrekte Funktion der Scheibenbremse. In anderen Worten: ein Mechaniker der ein erfindungsgemäßes Bremspad in eine Scheibenbremse einbaut, erkennt selbst bei schlechtem Licht und Sichtverhältnissen sofort, ob das Bremspad richtig eingesetzt wurde und kann gegebenenfalls die Einbaulage des Bremspads korrigieren. So kann die Montage- und Funktionssicherheit einer Scheibenbremse mittels eines erfindungsgemäßen Bremspads gesteigert werden.

Ein weiterer Vorteil der Erfindung ist, dass auf zusätzliche Bearbeitungsschritte und komplizierte Formgebungen des Bremspads und/oder der Rückenplatte bei der Fertigung verzichtet werden kann. Es müssen keine Aussparungen eingearbeitet oder versetzt zueinander angeordnete Flächen bearbeitet werden. Insbesondere die Bearbeitung der tangentialen Abstützflächen wird vereinfacht.

Einen weiteren Vorteil bringt ein erfindungsgemäßes Bremspad, da die erste radiale Abstützflächen größer ausgeführt werden kann, als die zweite radiale Abstützfläche und somit eine Flächenpressung resultierend aus den Umfangskräften beim Bremsen in tangentialer Richtung zwischen der Bremsscheibe und dem Belag auf die erste radiale Abstützfläche reduziert werden kann.

Vorteilhafterweise liegt der spitze Winkel in einem Winkelbereich von 84° bis 89°, vorzugsweise 86° bis 88°, weiter vorzugsweise 87° bis 88°, liegt und der stumpfe Winkel in einem Bereich von 91° bis 100° vorzugsweise 91° bis 95°, liegt, wobei die Summe der Gradzahlen des spitzen und des stumpfen Winkels gleich oder nahezu 180° beträgt.

In diesen Winkelbereichen kann ein ausreichender Überstand der Bremspads bei einem verdrehten Einbau realisiert werden.

Es ist denkbar, dass die erste radiale Länge der ersten radialen Abstützfläche länger ist, als die zweite radiale Länge der zweiten radialen Abstützfläche. Damit kann eine Außenkontur einer oberen tangentialen Fläche des Bremspads an eine äußere Umfangskontur der Bremsscheibe angepasst werden.

Vorteilhafterweise verläuft eine Außenkontur des Reibbelags abschnittsweise parallel zur Außenkontur der Rückenplatte. Dadurch wird eine Wirkfläche des Reibbelags zur Bremsscheibe möglichst groß und sorgt für eine Sichere Bremswirkung. In Bereichen, in denen sich die Rückenplatte jedoch weiter als die Reibfläche der Bremsscheibe erstreckt, wird der Reibbelag jedoch ausgespart um einen sicheren Bremsvorgang bei einer optimalen Materialausnutzung zu gewährleisten.

Es ist denkbar, dass die Außenkontur des Reibbelags parallel zur Außenkontur der Rückenplatte im Bereich der tangentialen Abstützflächen ist. Dadurch wird die Wirkfläche des Reibbelags vergrößert und einen sichere Bremsung wird gewährleistet. Vorteilhafterweise ist die gesamte Außenkontur des Reibbelags parallel zu der Außenkontur der Rückenplatte. In diesem Fall ist die Wirkfläche maximiert. Dadurch sind Verläufe der Außenkonturen ähnlich zueinander, was die Herstellung des Bremspads vereinfacht.

Es ist denkbar, dass nur wenigstens eine tangentiale Fläche vorgesehen ist, die in einer Tangentialebene liegt, wobei die tangentiale Fläche an einem Ansatz an der Rückenplatte liegt. Es ist weiter denkbar, dass die radialen Abstützflächen durch eine tangentiale Begrenzungsebenebene in radialer äußerer Richtung begrenzt werden, wobei die Tangentialebene weiter außen in Radialrichtung liegt, als die Begrenzungsebene oder im Bereich der Begrenzungsebene liegt.

Die der Erfindung zugrundeliegende Aufgabe wird auch gelöst durch eine Scheibenbremse für Fahrzeugachsen nach Anspruch 6. Die Scheibenbremse umfasst wenigstens eine Bremsscheibe zur Anordnung an einer Radnabe, einen Bremsträger zur ortsfesten Anordnung an einen Achskörper und einen am Bremsträger anordenbaren und die Bremsscheibe übergreifenden Bremssattel. Die Bremsscheibe, die Radnabe und der Achskörper sind um eine Bremsenmittelachse angeordnet. Der Bremsträger und/oder der Bremssattel weisen wenigstens eine Belagaufnahme auf. Die Belagaufnahme weist eine in einer ersten Radialebene liegende erste radiale Gegenfläche zur Abstützung gegen eine erste radiale Abstützfläche eines Bremspads auf. Die Belagaufnahme weist eine in einer zweiten Radialebene liegende zweite radiale Gegenfläche zur Abstützung gegen eine zweite radiale Abstützfläche eines Bremspads auf. Die erste Radialebene und die zweite Radialebene sind wenigstens weitgehend parallel zueinander verlaufend angeordnet. Eine Bremsenmittelebene liegt mittig zwischen der ersten Radialebene und der zweiten Radialebene und verläuft durch die Bremsenmittelachse. Wenn ein Bremspad in die Belagaufnahme eigesetzt ist eine Bremspadmittelebene deckungsgleich mit der Bremsenmittelebene. Die Belagaufnahme weist weiter wenigstens eine in einer Tangentialebene liegende tangentiale Abstützfläche zur Abstützung gegen wenigstens eine an einem Bremspad vorgesehene tangentiale Abstützfläche auf. Es ist vorgesehen, dass die Tangentialebene mit der ersten Radialebene einen spitzen Winkel und mit der zweiten Radialebene einen stumpfen Winkel einschließt.

Die Erfindung hat den Vorteil, wie weiter oben zum Erfindungsgemäßen Bremspad beschrieben, dass beim Einbau eines Bremspads in die Belagaufnahme des Bremssattels oder des Bremsträgers stets der Reibbelag in Richtung der Bremsscheibe zeigt und so ein korrekter Einbau stets gewährleistet ist.

Dabei ist vorteilhaft, wenn wenigstens ein Bremspad mit wenigstens einer radialen Abstützfläche und wenigstens einer tangentiale Abstützfläche angeordnet in der Belagaufnahme vorgesehen ist, wobei die radialen und tangentialen Gegenflächen der Belagaufnahme, also des Bremssattels und/oder des Bremsträgers, korrespondierend mit den radialen und tangentialen Abstützflächen des Bremspads ausgebildet sind.

Dies hat den Vorteil, dass wenn ein korrespondierend zu den tangentialen und radialen Gegenflächen ausgebildetes Bremspad in die Scheibenbremse eingesetzt ist, wobei eine Rückenplatte und/oder ein Reibbelag des Bremspads korrespondierend ausgebildet sind, ein Einbau mit der Rückenplatte zur Bremsscheibe sofort und ohne Prüfung auch bei schlechten Licht und/oder Sichtverhältnissen erkannt werden kann. Ein falsch herum eingesetztes Bremspad wird aus der Scheibenbremse herausstehen und einen weiteren Zusammenbau der Scheibenbremse, beispielsweise die Montage von Niederhaltemitteln, verhindern bis die falsche Einbaulage des Bremspads korrigiert ist. Durch den spitzen und stumpfen Winkel ist nur eine Einbauposition des Bremspads in Bezug auf die axiale Anordnung des Reibbelags zur Bremsscheibe und der Rückenplatte von der Bremsscheibe weg möglich. Die Bremspads werden dabei vorzugsweise aus einer radialen Richtung von außen in einen Schacht, der vorzugsweise eine Belagaufnahme bildet, in den Bremsträger und/oder Bremssattel eingesetzt. Das Einsetzen der Bremspads erfordert dabei vorzugsweise auch keine Demontage des Bremssattels und/oder des Bremsträgers.

Vorteilhafterweise liegt der spitze Winkel in einem Winkelbereich von 84° bis 89°, vorzugsweise 86° bis 88°, weiter vorzugsweise 87° bis 88°, und der stumpfe Winkel in einem Bereich von 91° bis 100° vorzugsweise 91° bis 95°, liegt, wobei die Summe der Gradzahlen des spitzen und des stumpfen Winkels 180° beträgt.

Es ist denkbar, dass die radialen und tangentialen Gegenflächen am Bremsträger und/oder am Bremssattel korrespondierend für Abstützflächen einer Rückenplatte eines erfindungsgemäßen Bremspads ausgebildet sind. Durch wenigstens weitgehend aufeinander abgestimmte Winkel und geometrische Größen der erfindungsgemäßen Scheibenbremse und des erfindungsgemäßen Bremspads kann bei einer einfachen Herstellung eine besonders hohe Prozesssicherheit beim Zusammenbau, sowie eine hohe Sicherheit beim Bremsen, sichergestellt werden.

Es ist denkbar, dass die erfindungsgemäße Scheibenbremse zwei erfindungsgemäße Bremspads, mit einem inneren Bremspad und einem äußeren Bremspad, umfasst, wobei das innere Bremspad und das äußere Bremspad gleich ausgebildet sind. Dies hat den Vorteil, dass mehr Gleichteile in der Scheibenbremse eingesetzt werden können. Es ist weiter denkbar, dass das innere Bremspad und das äußere Bremspad unterschiedlich ausgebildet sind. Dadurch kann ein Verdrehter und/oder Falscher Einbau beider Bremspads vorteilhafterweise unterbunden werden.

Vorteilhafterweise bilden die erste Radialebene, die zweite Radialebene und die Tangentialebene der erfindungsgemäßen Scheibenbremse einen Belagaufnahme, wobei eine erste Belagaufnahme und eine zweite Belagaufnahme, mit je einer ersten Radialebene, einer zweiten Radialebene und einer Tangentialebene vorgesehen sind. Die Ebenen der ersten Belagaufnahme können sich von den Ebenen der zweiten Belagaufnahme unterscheiden. Die erste Belagaufnahme ist fahrzeuginnen angeordnet und kann am Bremsträger und/oder am Bremssattel vorgesehen sein. Die zweite Belagaufnahme ist fahrzeugaußen angeordnet und kann am Bremsträger und/oder am Bremssattel vorgesehen sein.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1:: ein Bremspad eingesetzt in eine Scheibenbremse;
- Figur 2:: das Bremspad gem. Fig 1 falsch in die Scheibenbremse eingesetzt; und
- Figur 3:: eine Detailansicht gem. Fig 1.

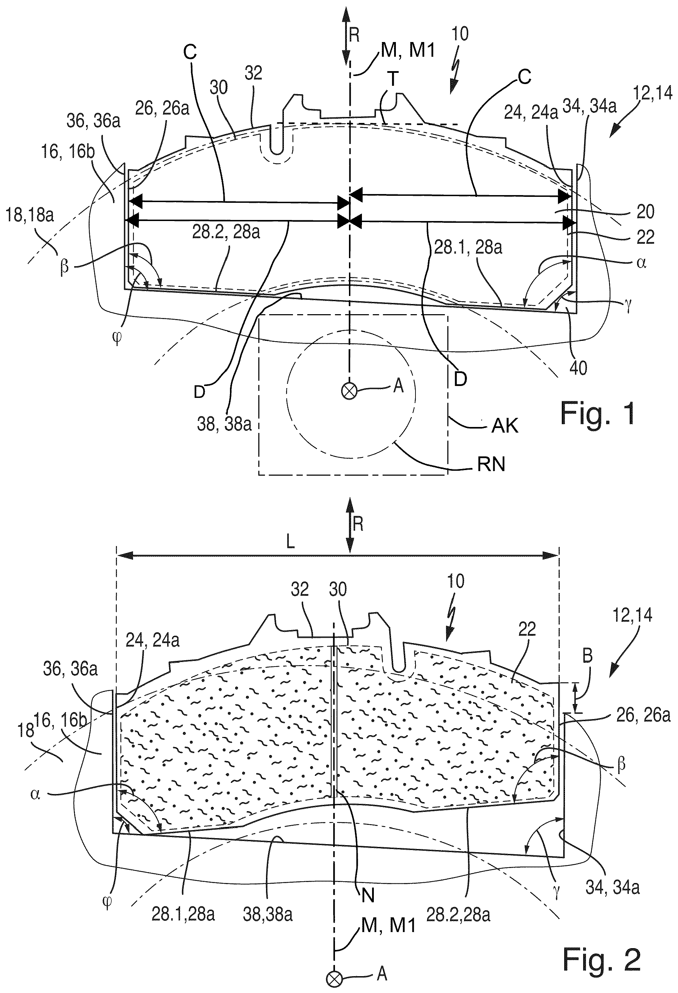

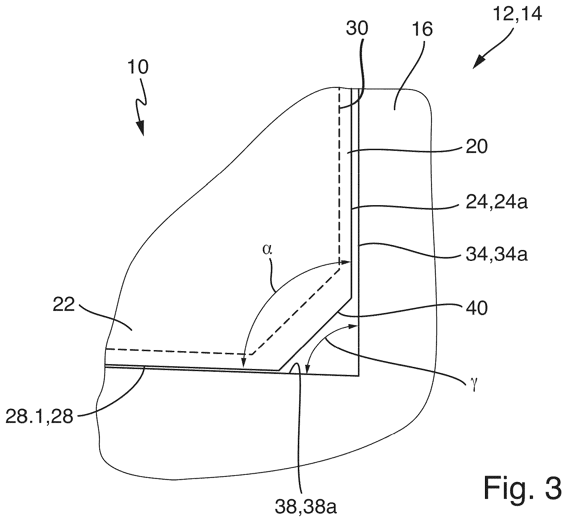

Figur 1 und 2 zeigen ein Bremspad 10 angeordnet in einer Belagaufnahme 12 einer Scheibenbremse 14. Die Scheibenbremse 14 umfasst einen Bremsträger 16 und einen eine Bremsscheibe 18 übergreifenden Bremssattel 16b. Die hier gezeigte Belagaufnahme 12 kann sowohl im der Bremsträger 16 als auch der Bremssattel 16b sein. Die Bremsscheibe 18 ist an einer Radnabe RN angeordnet. Der Bremsträger 16 ist ortsfest an einem Achskörper AK angeordnet. Der Bremsträger 16 ist dazu vorgesehen sowohl das Bremspad 10 aufzunehmen, als auch den Bremssattel 16b daran anzuordnen. Eine gattungsgemäße Scheibenbremse ist in den Figuren 3 bis 5 der DE 20 2005 005 798 U1 gezeigt, wobei auch Bremspads in den Belagaufnahmen angeordnet sind.

Das Bremspad 10 umfasst eine Rückenplatte 20 und einen darauf angeordneten, gegenüber der Rückenplatte 20 geringfügig zurückversetzten Reibbelag 22. Der Reibbelag 22 ist in Figur 1 und 3 als gestrichelte Linie seiner Außenkontur 30 dargestellt, da der Reibbelag 20 dort in die Zeichenebene hinein hinter der Rückenplatte 22 liegt. In Figur 2 ist die Ansicht so, dass der Reibbelag 20 direkt mit seiner Struktur sichtbar ist. Ferner ist eine Belagnut N in der Mitte des Reibbelags 22 des Bremspads 10 gezeigt. Die Bremsscheibe 18 ist durch einen Abschnitt eines Reibrings 18a, der mit dem Reibbelag 22 des Bremspads 10 zusammenwirkt, und in der Zeichungsebene hinter dem Bremspad 10 liegt, ebenso wie der Achskörper AK und die Radnabe RN gestichelt angedeutet.

Die Rückenplatte 20 weist eine erste radiale Abstützfläche 24, die in einer ersten Radialebene 24a liegt, und eine zweite radiale Abschnittsfläche 26, die in einer zweiten radialen Ebene 26a liegt, auf. Die erste Radialebene 24a und die zweite radiale Ebene 26a verlaufen wenigstens weitgehend parallel zueinander. Zwischen der ersten Radialebene 24a und der zweiten radialen Ebene 26a verlauft eine Bremspadmittelebene M, die zu den beiden Ebenen 24a, 26a einen wenigstens weitgehend gleichem Abstand C hat. Die Bremspadmittelebene M liegt also in der Mitte zwischen der ersten Radialebene 24a und der zweiten Radialebene 26a. Die Belagnut N verläuft ebenfalls entlang der Bremspadmittelebene M. Die Bremspadmittelebene M wird von der Bremsenmittelachse A und einer Orthogonalen auf der Bremsenmittelachse A aufgespannt, die mittig zwischen den beiden Ebenen 24a, 26a bzw. den Ebenen 34a, 36a verläuft. An der Bremsscheibe 18 liegt eine Tangente T an, welche senkrecht zur Bremspadmittelebene M verläuft.

Weiter weist die Rückenplatte 20 eine erste tangentiale Abstützfläche 28.1 und eine zweite tangentiale Abschnittsfläche 28.2 auf, die in einer gemeinsamen Tangentialebene 28a liegen. Die Ebenen 24a, 26a, 28a des Bremspads 10 sind dabei so angeordnet, dass die erste Radialebene 24a mit der Tangentialebene 28a einen spitzen Winkel α einschließt und die zweite Radialebene 24a mit der Tangentialebene 28a einen stumpfen Winkel β einschließt. Der spitze Winkel α liegt in einem Winkelbereich von 84° bis 89°, vorzugsweise 86° bis 88°, weiter vorzugsweise 87° bis 88°. Der stumpfe Winkel β liegt in einem Bereich von 91° bis 100° vorzugsweise 91° bis 95°. Dabei beträgt die Summe der Gradzahlen des spitzen und des stumpfen Winkels α, β, 180°.

Eine Außenkontur 30 des Reibbelags 22 ist abschnittsweise parallel zur Außenkontur 32 der Rückenplatte 20, damit die Wirkfläche des Reibbelags optimiert wird. Die Außenkontur 30 folgt dabei der Form des Reibrings der Bremsscheibe 18 um eine gute Wirkung des Reibbelags 22 mit der Bremsscheibe 18 beim Bremsen zu erreichen. Dadurch, dass das Bremspad 10 mit der Außenkontur 30 des Reibbelags 22 und/oder mit der Außenkonktur 32 der Rückenplatte 20 der Kontur der Bremsscheibe 18 im in die Belagaufnahme 12 eingesetzten Zustand folgt, schneidet die Ebene M eine Parallele der Tangente T ebenfalls rechtwinkelig.

Die dargestellte Belagaufnahme 12 wird von dem Bremsträger 16 gebildet und dient dazu den Bremsbelag 10 aufzunehmen. Die Belagaufnahme 12 ist auf einer Innenseite der Scheibenbremse 14 in Richtung nach Fahrzeuginnen entlang der Bremsenmittelachse A angeordnet. Das Bremspad 10 wird zum Einbau in die Scheibenbremse 14 in Radialrichtung R eingesetzt und entgegen der Richtung R aus der Belagaufnahme 12 zum Ausbau herausgenommen, die Radialrichtung R ist wenigstens weitgehend parallel zur Bremspadmittelebene M . Eine weitere Belagaufnahme auf einer Außenseite, nach Fahrzeugaußen entlang der Achse A, für ein zweites Bremspad 10 kann vom Bremssattel und/oder Bremsträger 16 gebildet werden (nicht dargestellt).

Die Belagaufnahme 12 umfasst eine erste radiale Gegenfläche 34, die in einer ersten Radialebene 34a liegt, eine zweite radiale Gegenfläche 36, die in einer zweiten Radialebene 36a liegt, und eine tangentiale Gegenfläche 38, die in einer Tangentialebene 38a liegt. Eine Bremsenmittelebene M1 liegt mittig zwischen der ersten Radialebene 34a und der zweiten Radialebene 36a. Die tangentiale Gegenfläche 38 kann auch in zwei tangentiale Gegenflächen aufgeteilt werden, die aber in der gleichen Tangentialebene 38 liegen (nicht dargestellt). Die Radialebenen 34a und 36a sind dabei wenigstens weitgehend parallel zueinander angeordnet und verlaufen mit wenigstens weitgehend gleichem Abstand D von der Bremsenmittelebene M1 M**.**

In Figur 1 sind die Ebenen 34a, 36a, 38a der Belagaufnahme des Bremsträgers 16 und/oder des Bremssattels dabei so angeordnet, dass die erste Radialebene 34a mit der Tangentialebene 38a einen spitzen Winkel γ einschließt und die zweite Radialebene 24a mit der Tangentialebene 28a einen stumpfen Winkel φ einschließt.

Der spitze Winkel γ liegt in einem Winkelbereich von 84° bis 89°, vorzugsweise 86° bis 88°, weiter vorzugsweise 87° bis 88°. Der stumpfe Winkel φ liegt in einem Bereich von 91° bis 100° vorzugsweise 91° bis 95°. Dabei beträgt die Summe der Gradzahlen des spitzen und des stumpfen Winkels γ, φ, 180°. Die spitzen Winkel α und γ sind vorzugsweise gleich oder in ähnlichen Winkelbereichen. Eine Detaildarstellung der der spitzen Winkel α, γ ist in Figur 3 gezeigt. Bei Verschiedenheiten der Winkel α, γ, ist der Winkel γ größer als der Winkel α um ein Einsetzen des Bremspads 10 in die Belagaufnahme 12 zu gewährleisten. Die stumpfen Winkel β, φ sind vorzugsweise gleich oder in ähnlichen Winkelbereichen. Bei Verschiedenheiten der Winkel β, φ, ist der Winkel φ größer als der Winkel β um ein Einsetzen des Bremspads 10 in die Belagaufnahme 12 zu gewährleisten.

In Figur 1 ist dargestellt, wie das Bremspad 10 richtig herum mit dem Reibbelag 22 zur Bremsscheibe 18 hin in die Belagaufnahme 12 eingesetzt ist. Dies ist daran erkennbar, dass das Bremspad 10 entlang der Richtung R radial mit dem Bremsträger 16 und/oder Bremssattel abschließt. Die Bremspadmittelebene M und Bremsenmittelebene M1 sind wenigstens weitgehend deckungsgleich. Denkbar wäre auch, dass das Bremspad 10 mit entlang der Richtung R radial mit dem Bremsträger 16 und/oder Bremssattel korrespondiert. Erkennbar ist zudem auch, dass die Außenkontur 30 des Reibbelags 22 an den radialen Seiten parallel mit der Außenkontur des Reibrings 18a der Bremsscheibe 18 verläuft. Denkbar wäre auch, dass die Außenkontur 30 mit einem gewissen radialen Abstand mit der des Reibrings 18a der Bremsscheibe 18 korrespondiert. Der spitze Winkel α des Bremspads 10 ist auf dem spitzen Winkel γ der Belagaufnahme 12 angeordnet und der stumpfe Winkel β des Bremspads 10 ist auf dem stumpfen Winkel φ der Belagaufnahme 12 angeordnet.

In der Figur 2 ist das Bremspad 10 falsch herum mit dem Reibbelag 22 weg von der Bremsscheibe in die Belagaufnahme 12 eingesetzt gezeigt, dennoch sind die Bremspadmittelebene M und Bremsenmittelebene M1 wenigstens weitgehend deckungsgleich. Der spitze Winkel α des Bremspads 10 ist über dem stumpfen Winkel φ der Belagaufnahme 12 angeordnet und der stumpfe Winkel β des Bremspads 10 ist über dem spitzen Winkel γ der Belagaufnahme 12 angeordnet. Deutlich erkennbar ist ein radialer Überstand B entlang der Richtung R des Bremspads 10 aus der Belagaufnahme 12 des Bremsträgers 16 heraus.

Während der Montage kann ein Mechaniker diesen Überstand B direkt erkennen und die Einbaulage des Bremspads 10 korrigieren, wenn das Bremspad 10 falsch herum eingesetzt wurde. Die Höhe des Überstand B des falsch eingesetzten Bremspads 10 ergibt sich aus der Gradzahl der Winkel α, β, φ, γ, und der Länge L des Bremspads 10 in tangentialer Richtung. Die Bremspadmittelebene M liegt in der Mitte der Länge L. Die rechte Ecke 40 der Rückenplatte 20 des Bremspads 10 ist in der in den Figuren 1-3 gezeigten Ausführungsform ausgespart, weshalb der Überstand B geringer ausfällt. Die Aussparung der Ecke 40 kann auch unterbleiben, wodurch dann der Überstand B beim Falscheinbau größer ausfällt.

Durch ein Bremspad 10 und eine Scheibenbremse 14 mit derartig in Ebenen 24a, 26a, 28a, 34a, 26a, 38a angeordneten Flächen 24, 26, 28.2, 28.1, 34, 26, 38 wird die Prozesssicherheit beim Zusammenbau der Scheibenbremse und die Sicherheit im Betrieb der Scheibenbremse gesteigert. Idealerweise ist der Überstand B konstruktiv so groß gewählt, dass sich das Bauteil zur Fixierung des Bremspads 10 in der Belagaufnahme 12 nicht montieren lässt.

### Bezugszeichenliste:

- 10: Bremspad
- 12: Belagaufnahme
- 14: Scheibenbremse
- 16: Bremsträger
- 16b: Bremssattel
- AK: Achskörper
- RN: Radnabe
- 18: Bremsscheibe
- 20: Rückenplatte
- 22: Reibbelag
- N: Belagnut
- M: Bremspadmittelebene
- M1: Bremsenmittelebene
- 24: erste radiale Abstützfläche
- 24a: erste Radialebene
- 26: zweite radiale Abstützfläche
- 26a: zweite Radialebene
- 28.1: erste tangentiale Abstützfläche
- 28.2: zweite tangentiale Abstützfläche
- 28a: Tangentialebene
- α: spitzer Winkel
- β: stumpfer Winkel
- φ: spitzer Winkel
- γ: stumpfer Winkel
- 30: Außenkontur Reibbelag
- 32: Außenkontur Rückenplatte
- A: Bremsenmittelachse
- 34: erste radiale Gegenfläche
- 34a: erste Radialebene
- 36: zweite radiale Gegenfläche
- 36a: zweite Radialebene
- R: Radialrichtung
- 38: Tangentiale Gegenfläche
- 38a: Tangentialebene
- 40: Ecke des Bremspads
- C: Abstand der Radialebenen des Bremsbelags von der Bremspadmittelebene
- D: Abstand der Radialebenen der Belagaufnahme von der Bremsenmittelebene
- L: Länge des Bremspads

## Patentansprüche

1. Bremspad (10) für eine Fahrzeugbremse, für eine Scheibenbremse (14), die eine Belagaufnahme (12) für das Bremspad (10) und eine um eine Bremsenmittelachse (A) angeordnete Bremsscheibe (18) umfasst, mit einer Rückenplatte (20) und mit einem auf der Rückenplatte (20) angeordneten Reibbelag (22),
wobei die Rückenplatte (20) eine in einer ersten Radialebene (24a) liegende erste radiale Abstützfläche (24) zur Abstützung gegen eine erste radiale Gegenfläche (34) an der Belagaufnahme (12) aufweist,
wobei die Rückenplatte (20) eine in einer zweiten Radialebene (26a) liegende zweite radiale Abstützfläche (26) zur Abstützung gegen eine zweite radiale Gegenfläche (36) an der Belagaufnahme (12) aufweist,
wobei die erste Radialebene (24a) und die zweite Radialebene (26a) wenigstens weitgehend parallel zueinander verlaufend angeordnet sind,
wobei eine mittig zwischen der ersten Radialebene (24a) und der zweiten Radialebene (26a) liegende Bremspadmittelebene (M) durch die Bremsenmittelachse (A) verläuft, wenn das Bremspad (10) in die Belagaufnahme (12) eingesetzt ist, und
wobei die Rückenplatte (20) zwei in einer gemeinsamen Tangentialebene liegende tangentiale Abstützflächen (28.1, 28.2) zur Abstützung gegen eine an einem Bremsträger (16) oder Bremssattel vorgesehene tangentiale Gegenfläche (38) aufweist,
**dadurch gekennzeichnet,**
**dass** die Tangentialebene (28a) mit der ersten Radialebene (24a) einen spitzen Winkel (α) und mit der zweiten Radialebene (26a) einen stumpfen Winkel (β) einschließt.

2. Bremspad (10) nach Anspruch 1, **dadurch gekennzeichnet, dass** der spitze Winkel (α) in einem Winkelbereich von 84° bis 89°, vorzugsweise 86° bis 88°, weiter vorzugsweise 87° bis 88°, liegt und der stumpfe Winkel (β) in einem Bereich von 91° bis 100° vorzugsweise 91° bis 95°, liegt, wobei die Summe der Gradzahlen des spitzen und des stumpfen Winkels (α, β) gleich oder nahezu 180° beträgt.

3. Bremspad (10) nach einem der vorherigen Ansprüche,
**dadurch gekennzeichnet, dass** eine Außenkontur (30) des Reibbelags (22) abschnittsweise parallel zur Außenkontur (32) der Rückenplatte (20) verläuft.

4. Bremspad (10) nach Anspruch 3, **dadurch gekennzeichnet, dass** die Außenkontur (30) des Reibbelags (22) parallel zur Außenkontur (32) der Rückenplatte (20) im Bereich der tangentialen Abstützflächen ist.

5. Bremspad (10) nach einem der vorherigen Ansprüche,
**dadurch gekennzeichnet, dass** die gesamte Außenkontur (30) des Reibbelags (22) parallel zu der Außenkontur (32) der Rückenplatte (20) ist.

6. Scheibenbremse (14) für Fahrzeugachsen, umfassend wenigstens eine Bremsscheibe (18) zur Anordnung an einer Radnabe (RN),
einen Bremsträger (16) der ortsfest an einen Achskörper (AK) anordenbar ist, wobei die Bremsscheibe (18), die Radnabe (RN) und der Achskörper (AK) um eine Bremsenmittelachse (A) angeordnet sind, und
einen am Bremsträger (16) anordenbaren und die Bremsscheibe (18) übergreifenden Bremssattel (16b), wobei der Bremsträger (16) und/oder der Bremssattel (16b) wenigstens eine Belagaufnahme (12) aufweist, wobei die Belagaufnahme (12) weist in einer ersten Radialebene (34a) liegende erste radiale Gegenfläche (34) zur Abstützung gegen eine erste radiale Abstützfläche (24) eines Bremspads (10) auf,
wobei die Belagaufnahme (12) weist eine in einer zweiten Radialebene (36a) liegende zweite radiale Gegenfläche (36) zur Abstützung gegen eine zweite radiale Abstützfläche (26) eines Bremspads (10) in der Belagaufnahme (12) auf,
wobei die erste Radialebene (34a) und die zweite Radialebene (36a) wenigstens weitgehend parallel zueinander verlaufend angeordnet sind, wobei eine mittig zwischen der ersten Radialebene (34a) und der zweiten Radialebene (36a) liegende Bremsenmittelebene (M1) durch die Bremsenmittelachse (A) verläuft, und wenn ein Bremspad (10) in die Belagaufnahme (12) eigesetzt ist eine Bremspadmittelebene (M) deckungsgleich mit der Bremsenmittelebene (M1) ist, und
wobei die Belagaufnahme (12) wenigstens eine in einer Tangentialebene (38a) liegende tangentiale Abstützfläche (38) zur Abstützung gegen wenigstens eine an einem Bremspad (10) vorgesehene tangentiale Abstützfläche (28.1, 28.1) aufweist,
**dadurch gekennzeichnet, dass** die Tangentialebene (38) mit der ersten Radialebene (34a) einen spitzen Winkel (γ) und mit der zweiten Radialebene (36a) einen stumpfen Winkel (φ) einschließt.

7. Scheibenbremse (14) nach Anspruch 6, **dadurch gekennzeichnet, dass** der spitze Winkel (γ) in einem Winkelbereich von 84° bis 89°, vorzugsweise 86° bis 88°, weiter vorzugsweise 87° bis 88°, liegt und der stumpfe Winkel (φ) in einem Bereich von 91° bis 100° vorzugsweise 91° bis 95°, liegt, wobei die Summe der Gradzahlen des spitzen und des stumpfen Winkels (γ, φ) gleich oder nahezu 180° beträgt.

8. Scheibenbremse (14) nach einem der Ansprüche 6 oder 7, **dadurch gekennzeichnet, dass** wenigstens ein Bremspad (10) mit wenigstens einer radialen Abstützfläche (24, 26) und wenigstens einer tangentiale Abstützfläche (28.1, 28.2) in der Belagaufnahme (12) vorgesehen ist, wobei die radialen und tangentialen Gegenflächen (34, 36, 38) der Belagaufnahme (12) korrespondierend mit den radialen und tangentialen Abstützflächen (24, 26, 28.1, 28.2) des Bremspads (10) ausgebildet sind.

9. Scheibenbremse (14) nach einem der Ansprüche 6 bis 8,
**dadurch gekennzeichnet, dass** die radialen und tangentialen Gegenflächen (34, 36, 38) der Belagaufnahme (12) korrespondierend für Abstützflächen (24, 26, 28.1, 28.2) einer Rückenplatte (20) eines Bremspads (10) nach einem der Ansprüche 1 bis 6 ausgebildet sind.

10. Scheibenbremse (14) nach einem der Ansprüche 6 bis 9 mit wenigstens einem Bremspad (10) nach einem der Ansprüche 1 bis 6, wobei, wenn das Bremspad (10) falsch herum mit dem Reibbelag (22) weg von der Bremsscheibe (18) in die Belagaufnahme (12) eingesetzt ist, das Bremspad (10) mit einem radialer Überstand (B) entlang einer Richtung (R) parallel zu der Bremsenmittelebene (M1) aus der Belagaufnahme (12) heraussteht.

11. Scheibenbremse (14) nach Anspruch 10 mit wenigstens einem Bremspad (10) nach einem der Ansprüche 1 bis 6, wobei der Überstand (B) so groß ist, dass ein Bauteil zur Fixierung des Bremspads (10) in der Belagaufnahme (12) nicht montierbar ist.

## Claims

1. Brake pad (10) for a vehicle brake, for a disc brake (14) which comprises a pad holder (12) for the brake pad (10) and a brake disc (18) arranged around a brake center axis (A), the brake pad having a backplate (20) and having a friction lining (22) arranged on the backplate (20),
wherein the backplate (20) has a first radial support surface (24) lying in a first radial plane (24a) for support against a first radial counter surface (34) on the pad holder (12),
wherein the backplate (20) has a second radial support surface (26) lying in a second radial plane (26a) for support against a second radial counter surface (36) on the pad holder (12),
wherein the first radial plane (24a) and the second radial plane (26a) are arranged to run at least largely parallel to one another,
wherein a brake pad center plane (M) lying centrally between the first radial plane (24a) and the second radial plane (26a) runs through the brake center axis (A) when the brake pad (10) is inserted into the pad holder (12), and
wherein the backplate (20) has two tangential support surfaces (28.1, 28.2) lying in a common tangential plane for support against a tangential counter surface (38) provided on a brake carrier (16) or brake caliper,
**characterized in that**
the tangential plane (28a) forms an acute angle (α) with the first radial plane (24a) and an obtuse angle (β) with the second radial plane (26a).

2. Brake pad (10) according to claim 1, **characterized in that** the acute angle (α) lies in an angular range of 84° to 89°, preferably 86° to 88°, more preferably 87° to 88°, and the obtuse angle (β) lies in a range of 91° to 100°, preferably 91° to 95°, wherein the sum of the degrees of the acute and the obtuse angle (α, β) is equal to or almost 180°.

3. Brake pad (10) according to any of the preceding claims,
**characterized in that,** in sections, an outer contour (30) of the friction lining (22) runs parallel to the outer contour (32) of the backplate (20).

4. Brake pad (10) according to claim 3, **characterized in that** the outer contour (30) of the friction lining (22) is parallel to the outer contour (32) of the backplate (20) in the region of the tangential support surfaces.

5. Brake pad (10) according to any of the preceding claims,
**characterized in that** the entire outer contour (30) of the friction lining (22) is parallel to the outer contour (32) of the backplate (20).

6. Disc brake (14) for vehicle axles, comprising at least one brake disc (18) for arrangement on a wheel hub (RN),
a brake carrier (16) which can be arranged in a stationary manner on an axle body (AK), wherein the brake disc (18), the wheel hub (RN) and the axle body (AK) are arranged around a brake center axis (A), and
a brake caliper (16b) which can be arranged on the brake carrier (16) and overlaps the brake disc (18), wherein the brake carrier (16) and/or the brake caliper (16b) has at least one pad holder (12), wherein the pad holder (12) has a first radial counter surface (34) lying in a first radial plane (34a) for support against a first radial support surface (24) of a brake pad (10),
wherein the pad holder (12) has a second radial counter surface (36) lying in a second radial plane (36a) for support against a second radial support surface (26) of a brake pad (10) in the pad holder (12),
wherein the first radial plane (34a) and the second radial plane (36a) are arranged to run at least largely parallel to one another, wherein a brake center plane (M1) lying centrally between the first radial plane (34a) and the second radial plane (36a) runs through the brake center axis (A), and, when a brake pad (10) is inserted into the pad holder (12), a brake pad center plane (M) is congruent with the brake center plane (M1), and
wherein the pad holder (12) has at least one tangential support surface (38) lying in a tangential plane (38a) for support against at least one tangential support surface (28.1, 28.1) provided on a brake pad (10),
**characterized in that** the tangential plane (38) forms an acute angle (γ) with the first radial plane (34a) and an obtuse angle (φ) with the second radial plane (36a).

7. Disc brake (14) according to claim 6, **characterized in that** the acute angle (γ) lies in an angular range of 84° to 89°, preferably 86° to 88°, more preferably 87° to 88°, and the obtuse angle (φ) lies in a range of 91° to 100°, preferably 91° to 95°, wherein the sum of the degrees of the acute and the obtuse angle (γ, φ) is equal to or almost 180°.

8. Disc brake (14) according to any of claims 6 or 7, **characterized in that** at least one brake pad (10) comprising at least one radial support surface (24, 26) and at least one tangential support surface (28.1, 28.2) is provided in the pad holder (12), wherein the radial and tangential counter surfaces (34, 36, 38) of the pad holder (12) are designed to correspond to the radial and tangential support surfaces (24, 26, 28.1, 28.2) of the brake pad (10).

9. Disc brake (14) according to any of claims 6 to 8, **characterized in that** the radial and tangential counter surfaces (34, 36, 38) of the pad holder (12) are designed to correspond to support surfaces (24, 26, 28.1, 28.2) of a backplate (20) of a brake pad (10) according to any of claims 1 to 6.

10. Disc brake (14) according to any of claims 6 to 9 having at least one brake pad (10) according to any of claims 1 to 6, wherein, when the brake pad (10) is inserted into the pad holder (12) the wrong way round with the friction lining (22) away from the brake disc (18), the brake pad (10) protrudes from the pad holder (12) with a radial overhang (B) in a direction (R) parallel to the brake center plane (M1).

11. Disc brake (14) according to claim 10 having at least one brake pad (10) according to any of claims 1 to 6, wherein the overhang (B) is so large that a component for fixing the brake pad (10) in the pad holder (12) cannot be installed.

## Revendications

1. Plaquette de frein (10) pour un frein de véhicule, pour un frein à disque (14), qui comprend un logement de garniture (12) pour la plaquette de frein (10) et un disque de frein (18) disposé autour d'un axe central de frein (A), avec une plaque arrière (20) et avec une garniture de friction (22) disposée sur la plaque arrière (20),
dans laquelle la plaque arrière (20) présente une première surface d'appui radiale (24) située dans un premier plan radial (24a) pour s'appuyer contre une première contre-surface radiale (34) sur le logement de garniture (12),
dans laquelle la plaque arrière (20) présente une deuxième surface d'appui radiale (26) située dans un deuxième plan radial (26a) pour s'appuyer contre une deuxième contre-surface radiale (36) sur le logement de garniture (12),
dans laquelle le premier plan radial (24a) et le deuxième plan radial (26a) sont disposés de manière à s'étendre au moins en grande partie parallèlement l'un à l'autre,
dans laquelle un plan médian de plaquette de frein (M) situé de manière centrale entre le premier plan radial (24a) et le deuxième plan radial (26a)
passe par l'axe central de frein (A) lorsque la plaquette de frein (10) est insérée dans le logement de garniture (12), et
dans laquelle la plaque arrière (20) présente deux surfaces d'appui tangentielles (28.1, 28.2) situées dans un plan tangentiel commun pour s'appuyer contre une contre-surface tangentielle (38) prévue sur un support de frein (16) ou étrier de frein,
**caractérisée en ce**
**que** le plan tangentiel (28a) forme un angle aigu (α) avec le premier plan radial (24a) et un angle obtus (β) avec le deuxième plan radial (26a).

2. Plaquette de frein (10) selon la revendication 1, **caractérisée en ce que** l'angle aigu (α) se situe dans une plage angulaire de 84° à 89°, de préférence 86° à 88°, de préférence encore 87° à 88°, et l'angle obtus (β) se situe dans une plage de 91° à 100°, de préférence 91° à 95°, dans laquelle la somme des degrés de l'angle aigu et de l'angle obtus (α, β) est égale à ou proche de 180°.

3. Plaquette de frein (10) selon l'une quelconque des revendications précédentes, **caractérisée en ce qu'**un contour extérieur (30) de la garniture de friction (22) s'étend par sections parallèlement au contour extérieur (32) de la plaque arrière (20).

4. Plaquette de frein (10) selon la revendication 3, **caractérisée en ce que** le contour extérieur (30) de la garniture de friction (22) est parallèle au contour extérieur (32) de la plaque arrière (20) dans la zone des surfaces d'appui tangentielles.

5. Plaquette de frein (10) selon l'une quelconque des revendications précédentes, **caractérisée en ce que** tout le contour extérieur (30) de la garniture de friction (22) est parallèle au contour extérieur (32) de la plaque arrière (20).

6. Frein à disque (14) pour essieux de véhicules, comprenant au moins un disque de frein (18) destiné à être disposé sur un moyeu de roue (RN),
un support de frein (16) qui peut être disposé de manière fixe sur un corps d'essieu (AK), dans lequel le disque de frein (18), le moyeu de roue (RN) et le corps d'essieu (AK) sont disposés autour d'un axe central de frein (A), et un étrier de frein (16b) pouvant être disposé sur le support de frein (16) et recouvrant le disque de frein (18), dans lequel le support de frein (16) et/ou l'étrier de frein (16b) présente au moins un logement de garniture (12), dans lequel le logement de garniture (12) présente une première contre-surface radiale (34) située dans un premier plan radial (34a) pour s'appuyer contre une première surface d'appui radiale (24) d'une plaquette de frein (10),
dans lequel le logement de garniture (12) présente une deuxième contre-surface radiale (36) située dans un deuxième plan radial (36a) pour s'appuyer contre une deuxième surface d'appui radiale (26) d'une plaquette de frein (10) dans le logement de garniture (12),
dans lequel le premier plan radial (34a) et le deuxième plan radial (36a) sont disposés de manière à s'étendre au moins en grande partie parallèlement l'un à l'autre, dans lequel un plan médian de frein (M1) situé de manière centrale entre le premier plan radial (34a) et le deuxième plan radial (36a) passe par l'axe central de frein (A), et lorsqu'une plaquette de frein (10) est insérée dans le logement de garniture (12), un plan médian de plaquette de frein (M) coïncide avec le plan médian de frein (M1), et
dans lequel le logement de garniture (12) présente au moins une surface d'appui tangentielle (38) située dans un plan tangentiel (38a) pour s'appuyer contre au moins une surface d'appui tangentielle (28.1, 28.1) prévue sur une plaquette de frein (10),
**caractérisé en ce que** le plan tangentiel (38) forme un angle aigu (γ) avec le premier plan radial (34a) et un angle obtus (φ) avec le deuxième plan radial (36a).

7. Frein à disque (14) selon la revendication 6, **caractérisé en ce que** l'angle aigu (γ) se situe dans une plage angulaire de 84° à 89°, de préférence 86° à 88°, de préférence encore 87° à 88°, et l'angle obtus (φ) se situe dans une plage de 91° à 100°, de préférence 91° à 95°, dans lequel la somme des degrés de l'angle aigu et de l'angle obtus (γ, φ) est égale à ou proche de 180°.

8. Frein à disque (14) selon l'une quelconque des revendications 6 ou 7, **caractérisé en ce qu'**au moins une plaquette de frein (10) avec au moins une surface d'appui radiale (24, 26) et au moins une surface d'appui tangentielle (28.1, 28.2) est prévue dans le logement de garniture (12), dans lequel les contre-surfaces radiales et tangentielles (34, 36, 38) du logement de garniture (12) sont réalisées en correspondance avec les surfaces d'appui radiales et tangentielles (24, 26, 28.1, 28.2) de la plaquette de frein (10).

9. Frein à disque (14) selon l'une quelconque des revendications 6 à 8, **caractérisé en ce que** les contre-surfaces radiales et tangentielles (34, 36, 38) du logement de garniture (12) sont réalisées en correspondance pour des surfaces d'appui (24, 26, 28.1, 28.2) d'une plaque arrière (20) d'une plaquette de frein (10) selon l'une quelconque des revendications 1 à 6.

10. Frein à disque (14) selon l'une quelconque des revendications 6 à 9 avec au moins une plaquette de frein (10) selon l'une quelconque des revendications 1 à 6, dans lequel, lorsque la plaquette de frein (10) est insérée à l'envers dans le logement de garniture (12) avec la garniture de friction (22) éloignée du disque de frein (18), la plaquette de frein (10) dépasse du logement de garniture (12) avec une saillie (B) radiale le long d'une direction (R) parallèle au plan médian de frein (M1).

11. Frein à disque (14) selon la revendication 10 avec au moins une plaquette de frein (10) selon l'une quelconque des revendications 1 à 6, dans lequel la saillie (B) est telle qu'il est impossible de monter un composant pour fixer la plaquette de frein (10) dans le logement de garniture (12).
